(19) Europäisches Patentamt
European Patent Office
Office européen des brevets

(11) **EP 2 647 730 B1**

(12) **EUROPEAN PATENT SPECIFICATION**

(45) Date of publication and mention of the grant of the patent:
**12.06.2019  Bulletin 2019/24**

(21) Application number: **13162160.9**

(22) Date of filing: **03.04.2013**

(51) Int Cl.:
*B32B 15/01* (2006.01)  *C22C 38/02* (2006.01)
*C22C 38/06* (2006.01)  *C22C 38/08* (2006.01)
*C22C 38/16* (2006.01)  *C22C 38/18* (2006.01)
*C21D 8/02* (2006.01)  *C21D 9/48* (2006.01)
*C21D 1/18* (2006.01)  *C21D 1/20* (2006.01)
*C22C 38/00* (2006.01)  *C22C 38/12* (2006.01)
*C23C 2/02* (2006.01)  *C22C 38/14* (2006.01)
*C22C 38/04* (2006.01)

(54) **A method for manufacturing a high strength formable continuously annealed steel strip**

Verfahren zur Herstellung eines hochfesten formbaren durchlaufgeglühten Stahlstreifens

Procédé de fabrication d'une bande d'acier recuite en continu formable à résistance élevée

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **03.04.2012  FI 20125379**

(43) Date of publication of application:
**09.10.2013  Bulletin 2013/41**

(73) Proprietor: **Rautaruukki Oyj**
**00620 Helsinki (FI)**

(72) Inventors:
• **Peura, Pasi**
  **37560 Lempäälä (FI)**

• **Lyytinen, Oskari**
  **37800 Toijala (FI)**
• **Kopio, Tero**
  **13600 Hämeenlinna (FI)**

(74) Representative: **Valea AB**
**Box 7086**
**103 87 Stockholm (SE)**

(56) References cited:
EP-A1- 1 319 726        WO-A1-2010/130871
JP-A- 2005 272 954      JP-A- 2005 336 526
JP-A- 2006 193 819      JP-A- 2007 321 207
JP-A- 2011 214 070      US-A- 4 426 235
US-A1- 2001 015 245     US-A1- 2004 047 756

**Description**

**Field of the invention**

The present invention relates to a method for manufacturing a high strength formable (HSF) continuously annealed steel strip and especially to a method according to the preamble of claim 1.

Especially the present invention relates to those steel strips, which utilize microalloying based strengthening instead of substantial phase hardening.

**Background of the invention**

Current trend in many industrial areas is to create lighter designs. For example, in automotive industry this trend is visible in the extending usage of advanced high strength steel grades, like dual or complex phase steels. But there still exist several applications where traditional microalloyed high strength steel types are more suitable materials than dual or complex phase steels. In those applications, high strength together with good hole expansion ratio is required.

These high strength formable steel grades are typically utilized in automated manufacturing lines of automotive industry, which require homogenous material properties due to the fact that long series can be produced with pre-defined settings of forming machine. Especially yield strength must be uniform essentially throughout the full length of the steel strip utilized because variations in yield strength causes changes in spring back effect which results in dimensional failures of the steel components, which is unacceptable.

Microalloying elements such as titanium, niobium and vanadium are traditionally used as alloying elements in high strength formable steels. Despite the micro level of alloying content, these alloying elements are commonly utilized since they provide major improvements in mechanical properties of such steel products. Due to the low alloying levels, also weldability of these microalloyed steels is excellent. Microalloying elements facilitate to manage grain refinement during hot-rolling resulting in hot-rolled steel products having smaller grain size. The strength of the hot-rolled steel strip is also increased due to the precipitation of those elements during coiling at temperatures higher than 400° C, such as at a temperature in the range 500 to 650° C, and also during subsequent cooling on the run-out table. At those temperatures, the microalloying elements form precipitates for instance with carbon and/or nitrogen which constitutes strength increase because movement of dislocations is hindered. When the coiling is carried out at such high temperature, the microstructure of the hot-rolled steel strip becomes typically ferritic-pearlitic.

However, when such commonly known hot-rolled steels strips strengthened by precipitation hardening and manufactured by using typical coiling temperatures are further processed by annealing in a continuous annealing line (hereinafter CAL), or by annealing in a hot-dip coating line (hereinafter HDCL), there arises an undesired effect that coarsening of mentioned precipitates takes place due to the opportune temperature and time involved in that further processing of the hot-rolled steel strip. This means, among other things that some of the strength increase gained by precipitation hardening may be lost in this further processing. Also the coarsened precipitates are not that effective to eliminate grain growth during annealing in a CAL or in a HDCL, which may lead to excessive grain growth which affects negatively formability. Coarsened precipitates can serve as starting points for fractures, which weakens elongation.

In addition, typical high coiling temperatures results in uneven mechanical properties throughout the length of the steel strip. Naturally long parts in head and a tail of the steel strip including different mechanical property could be removed, but that would notably increase the loss of steel material in the production, which is always undesired.

In the case of cold-rolled and continuously annealed steels produced by typical high coiling temperature, it is difficult to achieve yield strength levels much over 500 MPa (such as grades having yield strength 600-700MPa) with a fully recrystallized microstructure without phase hardening, i.e. like in a way that traditional microalloyed high strength formable steel grades are produced. The cold-rolled grain structure should be completely recrystallized after cold-rolling in continuous annealing process in order to have acceptable formability, but in turn precipitation strengthening should not be lost.

In order to improve recrystallization of cold-rolled grain structure, the literature has suggested that recrystallization could be facilitated by raising the coiling temperature and/or increasing the cold-rolling reduction. However, coiling at high temperatures leads to coarsened precipitates and unsatisfied strength of such continuously annealed steel strips, as described earlier. Also increased cold-rolling reductions are problematic for same reason due to the fact that if cold-rolling reductions are increased, the increased dislocation density obtained by increased cold-rolling reduction speeds up the diffusion which means that at least partial coarsening of precipitates takes easily place. This in turn decreases strength. In other words, particularly in cold-rolled and continuously annealed high strength formable steel strips there arises a difficulty of how to obtain simultaneously effective precipitation strengthening together with complete recrystallization.

Thus the general problem of prior art is the ineffective use of microalloying elements in the continuously annealed strips, which leads to deficiency related to simultaneous formability and high strength of the steel product.

US 2001/015245 discloses a flat product made of multiphase steel and a method for preparing the steel that includes hot rolling at a temperature at which the austenite phase is stable, then tempering to form a C and Mn-enriched phase in a matrix, followed by a heat treatment to form austenite islands and/or enriching in Mn the already formed austenite and cooling down to room temperature so as to obtain a final product with a ferrite matrix containing residual austenite. bainite and/or martensite islands.

US 2004/047756 concerns a method of producing cold rolled and annealed dual phase high strength steel sheets, and sheets produced by the method, including hot dip galvanized and galvannealed steel sheets having a tensile strength of at least about 750 MPa and a superior balance of strength and ductility using conventional thermomechanical processing parameters robust to the processing conditions. The synergistic effect on hardenability of Cr and V. within a controlled range, facilitates production using robust processing conditions, enabling production of a high strength product having a very low yield ratio.

EP 1,319,726 describes the fabrication of two-phase cold rolled steel sheet with a strength greater than 600 MPa which consists of: (a) reheating a slab to a temperature greater than 100 °C and less than 1250 °C; (b) hot rolling the slab, the temperature at the end of rolling being greater than or equal to the transformation temperature Ar3; (c) cooling the sheet obtained at a speed VR ≥ 10 °C/s; (d) coiling the sheet at a temperature Tbob such that 400 °C ≤ Tbob ≤ 700 °C; (e) cold rolling the sheet; (f) subjecting the cold rolled sheet to a continuous annealing treatment or galvanizing treatment or aluminizing treatment. The composition of the steel, by wt %, is:(a) 0.05 ≤ C ≤ 0.5: (b) 1 ≤ Mn ≤ 2.5: (c) 0.05 ≤ Si 1.5: (d) 0.01 ≤ Al ≤ 1.5: (e) Cr ≤ 0.75; (f) S ≤ 0.01: (g) P ≤ 0.1: (h) N ≤ 0.01: (i) at least one alloy element chosen from Ti. Nb. Zr and V. satisfying a given relationship with N: (j) the remainder being iron and production impurities. The relationships between Ti. Nb. Zr and V with N are: (a) 0.1 ≤ (Ti-3.4N) ≤0.2: (b) 0.01 ≤ (Nb-6.5N) ≤ 0.15: (c) 0.01 ≤ (Zr-6.5N) ≤ 0.15: (d) 0.01 ≤ 0i+Nb-3.4N) ≤ 0.35: (e) 0.01 ≤ (V-3.6N) ≤ 0.20: (f) 0.01 ≤ (Ti+V-3.4N) ≤ 0.40.

US 4,426,235 concerns a cold-rolled high strength steel plate with excellent formability and baking hardenability, which has the composition (% by weight) 0.2-0.15% of C. 0.02-0.7% of Mn. 0.01-0.1% of Al and 0.002-0.01% of N. optionally at least one element selected from the group consisting of 0.01-0.8% of Si. 0.01-0.1% of P. 0.0002-0.005% of B and 0.01-0.5% of V. and a microstructure comprising ferrite containing 2-30% of bainite and less than 8% of martensite. The steel plate is produced by hot and cold rolling steel of the defined composition followed by rapidly heating to a temperature between the Ac1 and Ac3 transformation points, holding at this temperature for less than 5 minutes, and Quenching to a temperature below 500°C at a cooling rate between 50 and °C/sec.

JP 2005272954 aims to provide a method for producing a high strength steel sheet in which problems as shown in conventional high strength steel sheets are solved, and which combines excellent ductility and stretch flange formability. A hot rolled steel sheet having a composition comprising, by mass. 0.07 to 0.25% C. ≤2.0% Si and 1.0 to 3.0% Mn. and the balance Fe with inevitable impurities, and in which the volume ratio of a low temperature transformation phase is ≥90%, and having a micro-Vickers hardness Hv of ≥300 or a steel sheet stock obtained by subjecting the same to cold rolling as well is heated, is held at 720 to 870°C for 5 to 300 s. and is thereafter cooled to ≤550°C at a cooling rate of ≥5°C/s, thus the high tensile strength steel sheet is produced.

JP 2005336526 aims to provide a high strength steel sheet in which the balance of strength, elongation and stretch flange formability (hole expansion ratio) is excellent, and particularly, the balance of the strength and elongation is further excellent. Regarding the high strength steel sheet having excellent workability, in a retained austenitic steel sheet comprising, by mass, 0.06 to 0.6% C. Si+Al: 0.5 to 3%, 0.5 to 3% Mn. ≤0.15% (excluding 0%) P and ≤0.02% (excluding 0%) S. and comprising tempered martensite, the space factor of the tempered martensite is ≥50% to the whole structure, the space factor of the retained austenite is 3 to 20% to the whole structure, and also, the average crystal grain size of the retained austenite is ≤4.5 um.

JP 2011 214070 aims to provide a high-strength cold-rolled steel sheet which has a low yield ratio and excellent ductility and hole expansibility without requiring special hot rolling and the addition of alloy elements such as Nb. Ti or the like. The cold-rolled steel sheet has a chemical composition containing, by mass. 0.01 to 0.15% C. 0.01 to 1.5% Si. 1.5 to 3.5% Mn, ≤0.1% P, ≤0.01% S. 0.005 to 1.5% and ≤0.010% N, wherein an α value (=Mn+Si) is ≥2.3%; a steel structure in which the volume ratio of ferrite at a depth position of 1/4 of the sheet thickness from the surface of the steel sheet is ≥40% and the volume ratio of martensite is ≥3%; and mechanical properties satisfying a yield ratio YR of ≤70%, and TSHER≥0.8010 and TS/(C100) ≥250, where TS(MPa) is a tensile strength and HER(%) is a hole expansion ratio.

JP 2007 321207 aims to provide a high-strength steel sheet having increased strength by suppressing the amount of alloy elements to be added, thus refining ferrite crystal grains, further having an excellent balance between the strength and ductility important upon press forming, and having excellent absorbed energy upon high speed deformation, and to provide its production method. The high-strength steel sheet has a metallic structure composed of a ferritic phase and a hard second phase dispersed into the steel sheet. The area ratio of the second phase occupied in the metallic structure is 30 to 70%, and the area ratio of the ferrite with crystal grain diameters of ≤1.2 um occupied in the ferritic phase is 15 to 90%, and, in the ferritic phase, the average grain diameter ds of the ferrite with crystal grain diameters of ≤1.2 um and the average grain diameter dL of the ferrite with crystal grain diameters of ≥1.2 um satisfy: dL/ds≥3.

JP 2006 193819 aims to provide a high-strength cold-rolled steel sheet superior in deep drawability, and to provide a manufacturing method therefor. The cold-rolled steel sheet includes, by mass%, 0.01-0.3% C. 2.5% or less Si. 0.1-2.0% Mn, 0.15% or less P, 0.015% or less S. 0.1-1.5% Mo. 0.0006-0.01% B, 0.15% or less Al, 0.01-0.20% Nb, 0.01% or less N. and Ti in an amount of 48/14*N (mass%) or more but 0.2% or less; has a structure in which the pole density of ä332}<113> is 4.5 or more and the pole density of ä100}<011> is 3 or less in a center layer in a sheet thicknesses direction; and further has a minimum r-value of 1.0 or more and an average r-value of 1.3 or more. The cold-rolled steel sheet includes one or more elements of Ca. Sn, Co, Zn, W, Zr, V. Mg, Rem, Ni. Cu and Cr as needed. The manufacturing method comprises hot-rolling the steel at a finishing temperature between an Ar3 transformation point and 900°C, cold-rolling the steel plate with a reduction of 30% to 70%, and annealing the steel sheet at a heating rate of 3°C/s or higher.

**Short description of the invention**

The object of the present invention is to solve or at least alleviate the above mentioned problems. Further a preferred object of the present invention is to provide a high strength formable continuously annealed steel strip that provides for simultaneous high strength ($R_{p0.2}$ more than 340 MPa or preferred values), good general formability ($A_{80}$>10% or preferred values) and in addition improves formability by reducing the variation of spring back effect during forming.

The object of the present invention is achieved with the method according to claim 1.

The present invention is based on direct quenching the microalloyed hot-rolled steel strip after the last hot-rolling pass of the hot-rolling step to a temperature below 400 °C and subjecting quenched steel strip to a continuous annealing at a temperature between 400 and 900 °C. In other words, quenched steel strip is utilized in a production of high strength formable continuously annealed steel strips. Such steel material is found to provide several advantages as described below.

This way at least part of, preferably at least most of the microalloying elements stay uniformly in the solution during the manufacturing of hot-rolled steel strip and they include uniform precipitation potential for the following process step(s). In other words, direct quenching can save at least most of the precipitation potential of microalloying elements uniformly in the hot-rolled steel resulting in at least reduced loss of precipitation strengthening after continuous annealing. Furthermore, as the direct quenching can cause phase hardening, such as microstructure consisting mainly of bainitic-ferrite and ferrite, the precipitation can be more effectively controlled in further manufacturing step(s). Therefore a high strength formable (HSF) continuously annealed steel strip product according to the present invention comprises a precipitation structure consisting at least partly of coherent and/or semicoherent precipitates. This means that in terms of mass percentages, at least 30%, more preferably at least 50% of microalloying elements maybe included in coherent and/or semicoherent precipitates.

The hot-rolled steel strip can be further cold-rolled in a cold-rolling step prior to continuous annealing in an annealing step. In this case, thanks to direct quenching, the cold-rolled steel strip can be easier recrystallized during annealing step without losing the precipitation strengthening. This is due to the phase hardened microstructure of quenched steel strip which means a possibility to lower the annealing temperature which improves utilization of microalloying elements, as shown later in this description.

Therefore the advantage of the present invention is that microalloying elements can be more effectively utilized. In addition, due to the present invention, the produced material is extremely well formable taking into account the strength level. The steel strip holds high strength because the precipitation strengthening is effective and the formability is excellent because the following reasons. First of all the microstructure of the steel strip is completely recrystallized even with reasonable cold-rolling reductions. Complete recrystallization can be partly due to the lack of effective precipitation structure in the hot-rolled steel strip and partly due to the microstucture consisting mainly of bainitic-ferrite and ferrite including higher driving force for recrystallization. Secondly, due to the fine precipitation structure in the annealed steel strip, the number of coarse precipitates is lower than typical. This means improved elongation because coarse precipitates can serve as starting points for fractures. Thirdly, grain size of the annealed steel strip can be kept fine since small precipitates hinder effectively grain growth after recrystalization. In addition also lowered annealing temperature is an advantage in grain size point of view. As a result the continuously annealed steel strip is highly formable including extremely good elongation, which can be seen from the experimental part of this description.

In other words, by means of the present invention, a continuous annealed cold-rolled steel strip, having especially effective precipitates spread in the recrystallized grain structure resulting in improved elongation values can be obtained. Furthermore, in case of low strength grades, by means of the present invention, the cold-rolling forces can be reduced because despite of the effect of phase hardening during direct quenching (mainly bainitic ferrite), the overall strength is lower because at least part of, preferably most of the microalloying elements are still in the solution.

In addition, due to the manufacturing method according to the present invention, the high strength formable continuously annealed steel strip product holds uniform mechanical properties essentially throughout the full length, i.e.

throughout a length of at least 90% of the rolling length (RL) of the steel strip. In other words the inventive method reduces significantly scatter in the mechanical properties essentially throughout the full length of the steel strip, especially scatter in yield strength. This means that steel material of such steel coil consisting of high strength formable continuously annealed steel strip, can be more effectively and safely utilized for instance at automated manufacturing lines including forming machines, without dimensional failures caused by changes in spring back effect. In other words, formability is improved in this point of view also since this way forming can cause more reliable dimensions of formed component. This also means that microalloying elements are more effectively utilized.

**Definitions**

In this description:

Cold-rolling means cold-rolling having reduction rate such as 30 to 95%, thus excluding possible skin pass rolling after hot-rolling. By definition the temperature of cold-rolling is below recrystallization temperature, but preferably below 200 °C.

High strength formable steel means in content of this description a steel having yield strength $R_{p0.2}$ at least 340 MPa (or preferred value) and total elongation $A_{80}$ at least 10 % (or preferred value).

Microalloyed means that steel is containing small amounts of vanadium, niobium and/or titanium. Content of individual microalloying elements is less than 0.15% and total content of microalloying elements less than 0.25%. (in terms of weight percentages). Typical complete composition of microalloyed steel is given later in the chapter detailed description of the invention.

Direct quenching means accelerated cooling the hot-rolled steel strip directly from the heat available in the hot-rolling process to low temperature. It does not include metallurgical martensite reaction, i.e. a typical hardening quenching which causes martensite reaction.

**Brief description of the figures**

Figure 1 is a flow sheet showing the steps which are included in one embodiment of the method.
Figure 2 is a flow sheet showing the steps which are included in another embodiment of the method. In this embodiment, a continuous annealed and cold-rolled high strength formable steel strip is obtained.
Figure 3 is a flow sheet showing the steps which are included in yet another embodiment of the method. In this embodiment, a continuous annealed and hot-dip coated hot-rolled high strength formable steel strip is obtained.
Figure 4 is a flow sheet showing the steps which are included in yet another embodiment of the method. In this embodiment, a continuous annealed, hot-dip coated and cold-rolled high strength formable steel strip is obtained.
Figure 5 is an enlargement of a microstructure including non-recrystallized areas.
Figure 6 is an enlargement of a microstructure that has been recrystallized and that has been obtained by an embodiment as depicted in figure 2,4 or 10.
Figure 7 shows schematically a partly uncoiled steel coil (8) from the side projection
Figure 8 shows schematically a steel strip (7) having rolling length (RL) from the top projection
Figure 9 shows schematically a general problematic related to second main embodiment and effects of the present invention on it.
Figure 10 shows schematic time-temperature drawing comprising also optional features of the second main embodiment.
Figure 11 shows SEM images of the microstructures of hot-rolled and quenched steel

**Brief description of the reference numbers, letters and terms**

1. Providing step
2. Hot-rolling step
3. Quenching step
4. Cold-rolling step

5. Annealing step
6. Hot-dip coating step
7. Rolled steel strip
8. Steel coil
9. Non-rolled part

RL      Rolling length of the steel strip
NRL    Non rolled-length of the steel strip
R        Scrapped length
FL      Full length of the rolled steel strip
L        Longitudinal, i.e. rolling direction of the steel strip
H       Head part of the steel strip
M      Middle part of the steel strip
T       Tail part of the steel strip
HSF     High strength formable
$R_{p0.2}$    Yield strength
$R_m$      Ultimate tensile strength
$A_g$       Uniform elongation
$A_{80}$     Total elongation
$A_{c1}$      a temperature at which austenite begins to form during heating
$A_{c3}$      a temperature at which transformation of ferrite to austenite is completed during heating
$A_{r1}$      a temperature at which austenite to ferrite is completed during cooling
$A_{r3}$      a temperature at which austenite begins to transform to ferrite during cooling
$T_{RST}$    a temperature at which recrystallization of austenite is stopped

## Detailed description of the invention

Precipitation behavior of microalloying elements has been under intensive research for decades. It has been established, that precipitates can be classified in three different types, depending on which stage of manufacturing or fabricating the precipitate has occurred: Type I precipitates are considered to form in austenite during or after smelt processing and are typically referred as inclusions. Type II precipitates are considered to form in austenite during hot deformation. Finally, type III precipitates are considered to form in ferrite during or after austenite to ferrite phase transformation. The main intention of present invention is to control type III precipitates prior to continuous annealing and thereby affect the precipitation structure of a high strength formable continuously annealed steel strip. Type III precipitates tend to pose effective precipitation hardening due their size, which can be affected by means of the present invention.

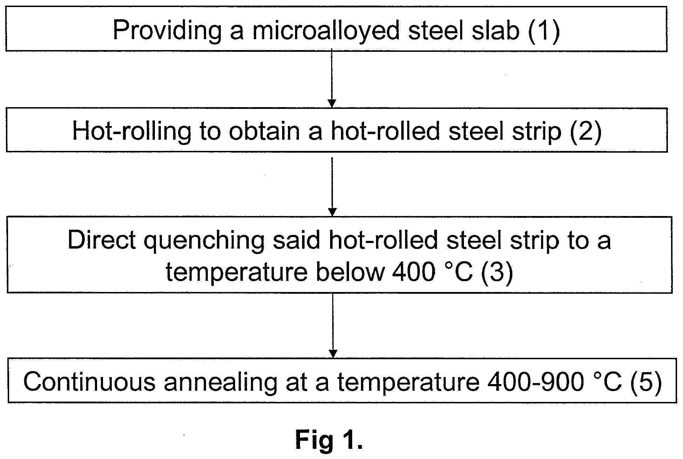

Next the method and preferred embodiments and variants thereof will be described in greater detail. Referring to figure 1, there is shown the basic steps which are included in the method for manufacturing a continuously annealed high strength formable (HSF) steel strip product including yield strength $R_{p0.2}$ more than 340 MPa.

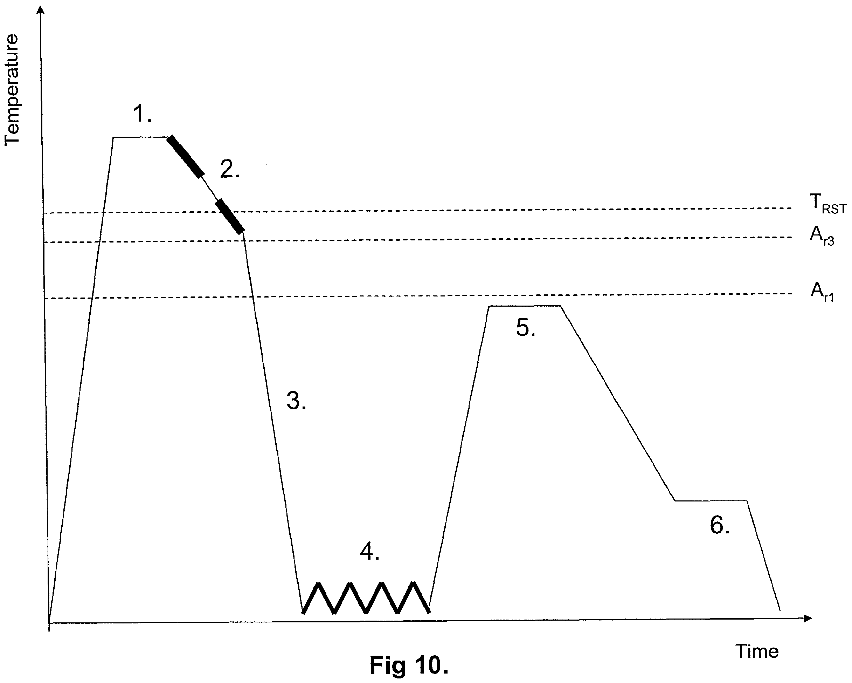

First, a microalloyed steel slab is provided in a providing step 1. This can be understood that steel forming the steel slab is alloyed with one or more microalloying elements belonging to the group consisting of Titanium Ti, Niobium Nb and Vanadium V. This is because those microalloying elements are able to form different kind of precipitates providing beneficial effects, i.e. different kind of carbides, nitrides and carbonitirides. The providing step 1 may include a casting step (not shown in the figures) for continuously casting such microalloyed steel slab and a heating step (shown in fig 10) for heating the steel slab to a temperature in the range of 900 to 1350 °C or in the range 900 to 1300 °C, in order to dissolve at least most of the microalloying elements in the steel slab. Naturally heating may be followed with equalizing step in which said dissolving and temperature equalization is carried out, as shown in fig 10. Optionally the microalloyed steel slab may be directly charged into a furnace in the equalizing step without cooling the microalloyed steel slab substantially after continuous casting in a such casting step. Preferable at least most of the microalloying elements, however excluding TiN, are dissolved prior to a hot-rolling step 2, i.e. a microalloyed steel slab in a temperature range 900 to 1350 °C or in a temperature range 900 to 1300 °C and in which most of the microalloying elements are dissolved, is provided in step 1.

Secondly, the method comprises a hot-rolling step 2 for hot-rolling said steel slab in order to obtain a hot-rolled steel strip. Therefore, as usual, this step can be performed at least partly in a strip rolling mill. Further, as usual, hot-rolling step 2 can include hot-rolling at a temperature in the range 800-1250°C, but preferably in the range $A_{r3}$ to 1250°C. The hot-rolling step 2 may be a thermomechanical rolling process consisting of two stages including rolling in a pre-rolling stage and a subsequent rolling stage in a strip rolling mill having a final rolling temperature (FRT), i.e. a temperature of last hot-rolling pass in the hot-rolling step 2, that is for example between 800 and 940 °C. It is however preferred that the final hot-rolling temperature (FRT) in the hot-rolling step 2 is above the $A_{r3}$ temperature. This is because otherwise problems related to rolling-texture and strip flatness may follow. Optionally the final hot-rolling temperature (FRT) in hot-rolling step 2 can be between $T_{RST}$ and $A_{r3}$ temperatures, as shown in fig 10. Above mentioned thermomechanical rolling process can help to achieve desired mechanical properties by reducing the grain size of phase hardened microstructure and increasing further phase substructures.

Thirdly, after the last pass in the hot-rolling step 2, a quenching step 3 is performed in order to obtain a quenched steel strip as a result of the quenching step. A quenched steel strip includes phase hardened microstructure, such as a microstructure consisting mainly of bainitic-ferrite and ferrite, including a phase sub-structures that are beneficial for the following process step(s). In addition the quenching step 3 results in that at least part of, preferably at least most of the microalloying elements are kept in the solution during the cooling from the hot-rolling heat. This is obtained by using an average cooling rate of at least 30 °C/s in the quenching step 3 and by cooling the hot-rolled steel strip to a temperature below 400 °C in the quenching step 3. Furthermore, it is preferred that the temperature of the hot-rolled steel strip is at least 700 °C, more preferably at least 800 °C at the beginning of the quenching step 3. This means that the quenching in the quenching step 3 can begin within 15 seconds of the last rolling pass of the hot-rolling step 2, for instance. Also the temperature of the hot-rolled steel strip decreases continuously after the last rolling pass of the hot-rolling step 2, i.e. the method does not include any maintaining in a two-phase region (between $A_{r3}$ to $A_{r1}$) or in single phase reqion (below $A_{r1}$) at constant temperature in order to avoid excessive precipitation at this stage, i.e. during quenching step 3. This means that the quenching step 3 is a so-called single cooling step, as depicted in fig 10. It is also preferred that the cooling (i.e. quenching) end temperature of the hot-rolled steel strip in the quenching step 3 is below 250°C, more preferable below 100 °C, most preferable the ambient temperature. The lower the cooling (i.e. quenching) end temperature is, the more beneficial phase substructures the microstructure of the steel strip holds.

Depending on the production facilities, the steel strip may be coiled after being quenched. The temperature of the steel strip can decrease continuously throughout the full length of the steel strip from the end of quenching step 3 to the start of coiling step. Due to the quenching, the optional coiling is carried out at low temperature, which coiling temperature is naturally lower than the cooling (i.e. quenching) end temperature because in case the coiling is carried out, it is carried out after the quenching step 3. It must be understood that the quenching in quenching step 3 is carried out from the heat available in the hot-rolling process, i.e. direct quenching the hot-rolled steel strip after hot-rolling. However, it is highly important to note that quenching in every point of this patent publication refers to accelerated cooling to low temperature and not to metallurgical martensite reaction, i.e. not to hardening quenching which causes martensite reaction, as defined under definitions-chapter.

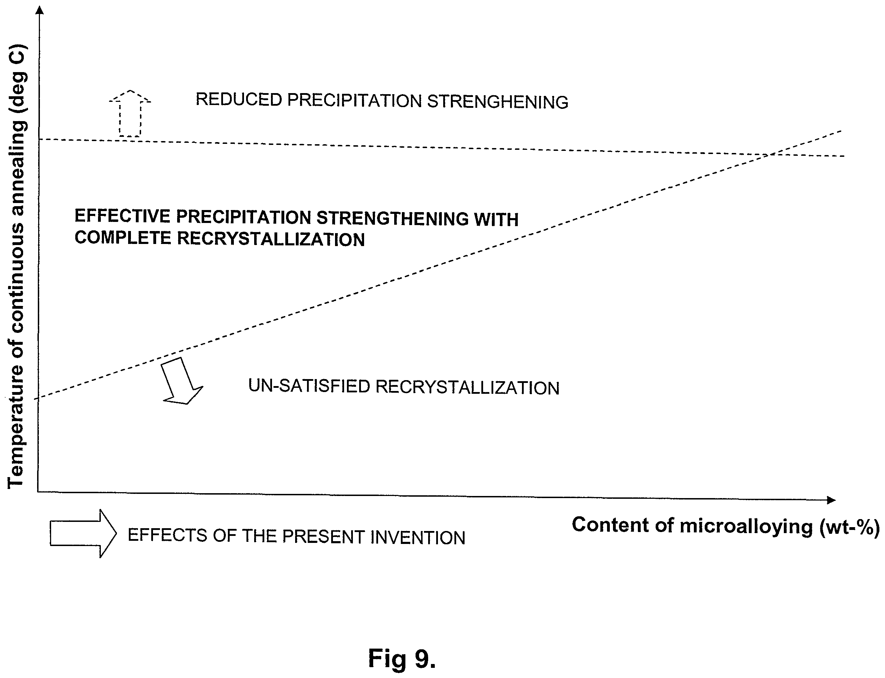

The result at this quenching step 3 is a quenched steel strip which has potential to uniformly increase the yield strength by precipitation thanks to microalloying elements uniformly in solution throughout the length of the steel strip. Due to the quenching step 3 the steel strip has less variation in mechanical properties throughout the rolling length RL of the steel strip compared to conventionally produced steel strips. In spite of some preliminary precipitation may have occurred during quenching step 3, at least part of, preferably at least most of the microalloying elements have stayed in the solution of quenched steel strip. In other words, precipitation in the quenched steel strip may be at this stage of the method at initial stage, thus at least partly, preferably essentially preventing large scale coarsening or growing of precipitates during said subsequent continuous annealing in the annealing step 5. This is demonstrated schematically in fig 9 as the present invention raises the temperature limit at which precipitation strengthening is reduced. In terms of mass percentages, at least 30% of microalloying elements may stay in the solution of hot-rolled steel strip. More preferably at least 50% and most preferably at least 60% of microalloying elements may stay in the solution of hot-rolled steel strip. This anyway means that effective precipitation structure is easier to be achieved in subsequent production steps. Therefore the above mentioned conditions for quenching provide a steel strip including such a steel material which is advantageous for the following steps.

Subsequently as shown in figs, after the quenching step 3, the quenched steel strip is subjected to an annealing step 5 for continuously annealing the quenched steel strip at an annealing temperature between 400 and 900 °C. The microalloying elements begin to precipitate or preliminary precipitates continue to grow, when the quenched steel strip is continuously annealed after the quenching step 3 in an annealing step 5. Such annealing may be performed in a continuous annealing line (CAL) or, in a hot-dip coating line (HDCL). Prior to annealing step, the hot-rolled steel strip may be pickled. In case of HDCL, the method additionally to an annealing step 5 includes a hot-dip coating step 6, or also other subsequent production steps.

The continuous annealing in the annealing step 5 is performed at temperature range from 400 to 900 °C, preferably from 450 to 900 °C. At least 400 °C is required for changes in precipitation structure and on the other hand to ensure hot-dip coating ability for instance by hot-dip galvanizing with zinc-aluminum coating. Basically for the same reasons, preferred lower limit of 450°C is given. Continuous annealing temperature is not more than 900 °C, because otherwise precipitates could grow excessively or even dissolve again. In addition higher temperatures are non-economical. The annealing time in the annealing step 5 can be 15 to 500 s or more preferable 15 to 180 s. The annealing temperature and the annealing time can be varied in the given scope depending on the case.

During annealing step 5 extremely small precipitates, i.e. different sizes of coherent precipitates and/or semi-coherent precipitates, may be build up in the matrix, i.e. in the microstructure of high strength formable continuously annealed steel strip. Also when the mentioned preliminary precipitates, if any, start growing, they increase the yield strength of the steel strip. The strength increasing effect of coherent and semi-coherent precipitates is based on strain fields around them. It is well known that the bigger their size is, the more yield strength they provide until they lose their coherency by outlining from the matrix and by turning into incoherent precipitate.

However, by means or the present invention the precipitation structure of high strength formable continuously annealed steel strip can consist at least partly of coherent and/or semicoherent precipitates. Preferably, the precipitation structure may consist essentially of coherent and/or semicoherent precipitates, i.e. the precipitation structure does not include incoherent precipitates or the amount of those is relatively low. As explained earlier, preferably the precipitation structure means only Type III precipitates and Type I/Type II precipitates are out of consideration. This leads to increase in elongation and also in strength compared to the precipitation structure consisting essentially of incoherent precipitates, which incoherent precipitates may be overmuch included in the high strength formable steel strips of prior art. Thus, by means of the present invention, the utilization rate of microalloying elements can be increased.

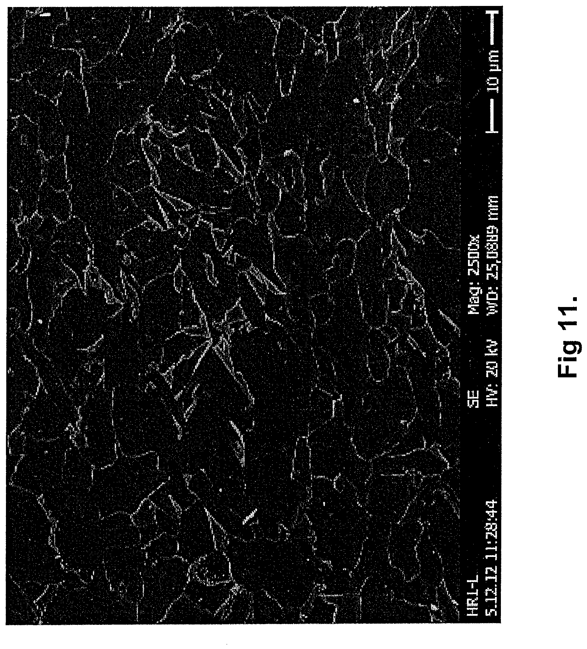

A microstructure of the quenched steel strip can consist mainly of bainitic-ferrite and ferrite, such as bainitic-ferrite and ferrite that are substantially free of carbides such as substantially free of cementite. In addition small amount of carbon rich MA-islands (martensite-austenite islands) may be included in the microstructure of the quenched steel strip. Such a microstructure is depicted in fig 11. Therefore it is preferred that in said annealing step (5) a quenched steel strip comprising said microstructure consisting mainly, preferably completely of bainitic-ferrite and ferrite is annealed in annealing step 5. This is beneficial especially when recrystallization of cold-rolled microstructure is needed, as shown in table 1.

Preferably, such a microalloyed steel slab is provided in the providing step, which comprises in mass percentages V 0.01 to 0.15 %, and optionally one or more of Ti and Nb. Especially, if said annealing temperature is in the range from 400 to 650 °C, preferably in the range from 450 to 650 °C, it is preferred, that the steel slab provided in said providing step 1 comprises vanadium, V, in terms of mass percentages from 0.01 to 0.15 %, preferably from 0.02 to 0.10%. This is because vanadium holds especially suitable precipitation behavior at this temperature range. In an annealing temperature range from 650 to 900 °C, also other microalloying elements titanium, Ti, and niobium, Nb, can be effectively used. It is preferred, that the steel slab provided in said providing step comprises Ti in terms of mass percentages from 0.01 to 0.045 %.

In a first main embodiment of the method the continuous annealing step 5 is performed for a quenched steel strip in the form of a quenched hot-rolled steel strip that is obtained as a result of the quenching step 3. In other words, in this first main embodiment of the method a cold-rolling step 4 is not performed after the quenching step 3 and prior to the continuous annealing step 5. According to prior art, hot-rolled steel strips having low carbon content and which are coiled at high temperatures and which are hereafter directly processed in continuous annealing, such as in a hot hip coating line (HDCL), can have tendency for undesired pronounced yield point. This leads to localized strains during forming which impairs the formability. However, by continuously annealing the quenched hot-rolled steel strip obtained as a result of the quenching step 3, in addition to effective precipitation, such pronounced yield point may be slightly reduced and formability may thereby increased. Preferably, in this first embodiment, said annealing temperature used in the annealing step is 400 to 650 °C, preferably in the range from 450 to 650 °C. A temperature higher than 650°C may be needless or even undesired for precipitation.

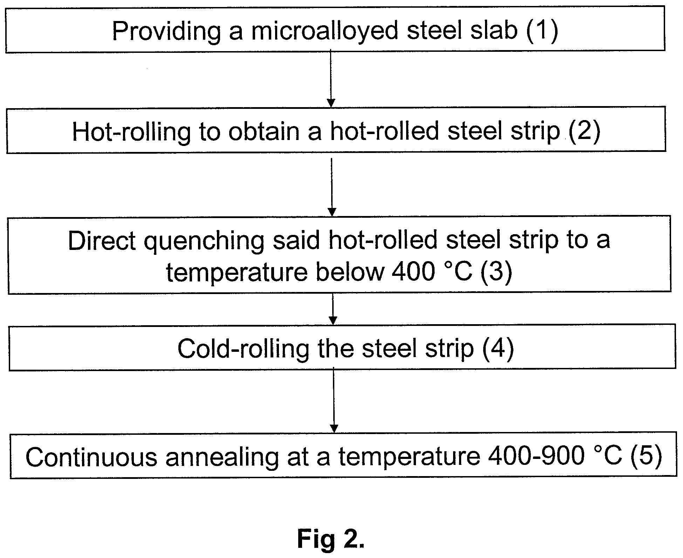

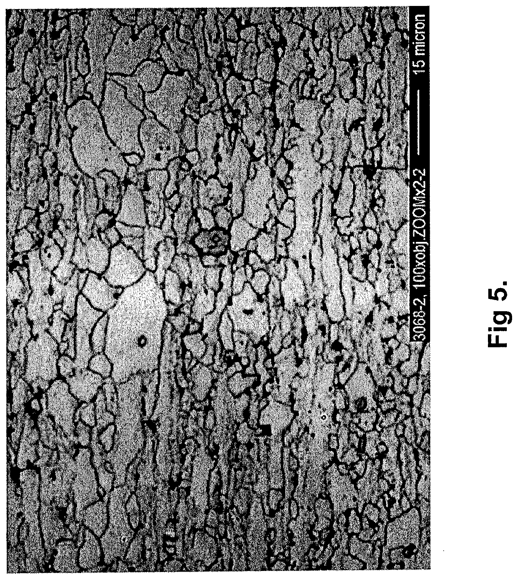

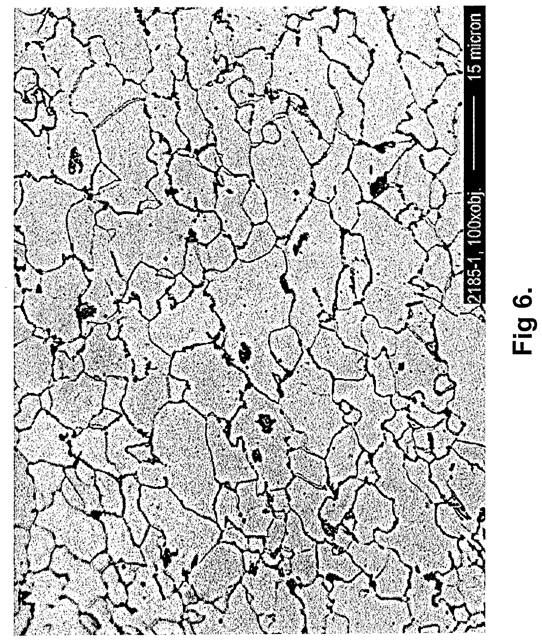

In a second main embodiment of the method, as shown in fig 2, the method comprises a cold-rolling step 4 for cold-rolling the quenched steel strip obtained as a result of the quenching step 3 to obtain a quenched and subsequently cold-rolled steel strip as a result from this cold-rolling step 4 and an annealing step 5 for continuously annealing this quenched and subsequently cold-rolled steel strip obtained as a result of the cold-rolling step 4. Reduction such as 30 to 95 % may be used in cold-rolling. In this embodiment, in addition to recrystallization of the quenched and subsequently cold-rolled steel strip during the continuous annealing in the annealing step 5, effective precipitation is obtained. Thanks to direct quenching in the quenching step 2, the quenched and subsequently cold-rolled steel strip includes also higher driving force for recrystallization. This means that recrystallization may be obtained at lower annealing temperatures than 800 °C, such as at 680 to 720 °C, and in this way a coherent precipitation structure is advantageously obtained without excessive coarsening of precipitates and grain growth. Different grain structures are demonstrated in figs 5 and 6. The recrystallized and even grain structure, preferably recrystallized grain structure consisting essentially of ferrite grains, obtained advantageously by the present invention, is depicted in fig 6. The grain structure depicted in fig 5 is only partly recrystallized which is unacceptable.

Table 1 below shows examples of how quenched steel strip including microstructure consisting essentially of bainitic-ferrite and ferrite depicted in figure 11 and obtained by low coiling temperature (LCT), i.e. obtained by direct quenching, affects on mechanical properties of cold-rolled steel. Measurements are taken from un-annealed cold-rolled material, i.e. from full hard samples. Both steels A and B were microalloyed with the difference that steel B was having Nb-V-Ti microalloying as the steel A included only Nb microalloying. The cold-rolling reductions were 50 % for steel A and 60 % for steel B.

It can be seen from table 1 that steels in LCT condition have work hardened in the cold-rolling much more than the steels in high coiling temperature (HCT) condition. Compared to HCT, LCT provides on average about 150 MPa absolute increase in both yield and tensile strength of cold-rolled steels. At least partly due to this higher strength of cold-rolled steel strip obtained by quenching step 2, the recrystallization of cold-rolled grain structure can take place easier and simultaneously effective precipitations structure can be obtained. In other words, cold-rolling quenched steel strip including microstructure consisting essentially of bainitic-ferrite and ferrite causes surprisingly higher driving force for recrystallization.

Table 1.

| Specimen | Cold Rolled Full Hard Samples | | | |
|---|---|---|---|---|
| | Re | Rm | Ag | A80 |
| Steel A LCT | 1013 | 1080 | 1.4 | 4.0 |
| Steel A HCT | 860 | 917 | 0.8 | 3.5 |
| Steel B LCT | 1086 | 1138 | 0.9 | 1.1 |
| Steel B HCT | 934 | 1002 | 0.8 | 2.5 |

In table 1 Re means the lower yield point, which can be considered simply as yield strength in this context.

Referring to fig 9, there is shown schematically a general problematic related to prior art in cold-rolled high strength formable steels and possible effects of the present invention on it. As can be seen, the present invention lowers the temperature limit of complete recrystallization and also raises the temperature limit at which precipitation strengthening is reduced, thereby widening the temperature area of effective precipitation with complete recrystallization. As can be seen, widening is needed especially when microalloying content is increased, due to the narrowing process window with increased microalloying level. Lower possible annealing temperature is also advantageous in production due to the energy savings.

In this second main embodiment of the method that includes a cold-rolling step 4 for cold-rolling the quenched hot-rolled steel strip to obtain a quenched and subsequently cold-rolled steel strip as a result of the cold-rolling step 4 and an annealing step 5 for continuous annealing the quenched and subsequently cold-rolled steel strip, such a microalloyed steel slab is preferably, but not necessarily, provided in the providing step 1 that comprises in terms of mass percentages titanium, Ti, not higher than 0.05%, preferably Ti from 0.01 to 0.045%, because a higher titanium content may hinder recrystallization during annealing. However, small amount of titanium may be needed because it provides for grain refining and precipitation strengthening. Preferably, in this second embodiment, the continuous annealing in the annealing step 5 is performed at temperature range from 650 to 900 °C, and most preferably below 800 °C, such as in a range from 680 to 720°C.

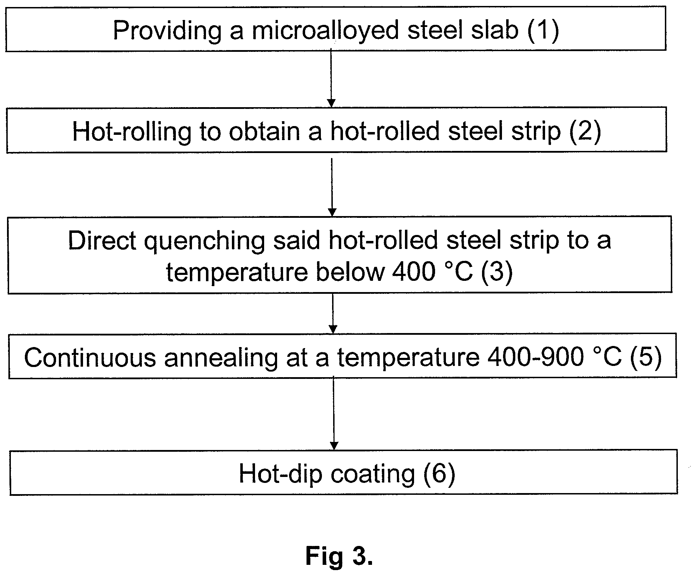

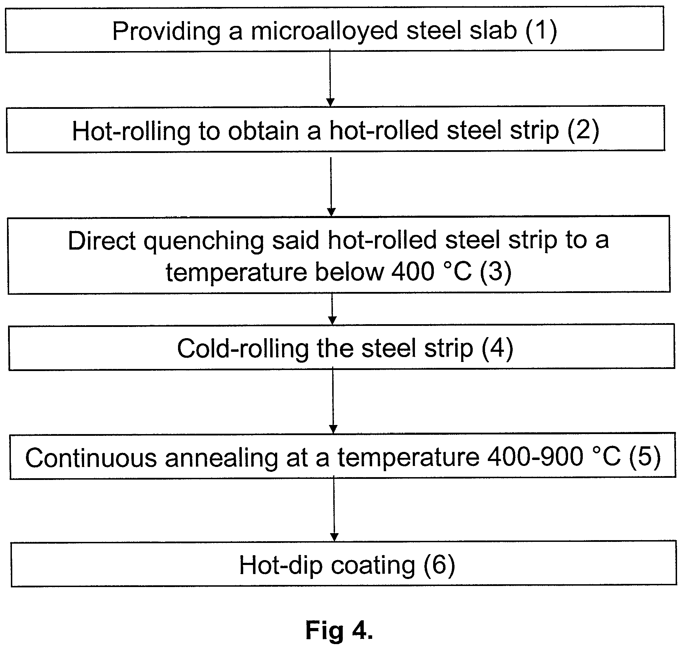

In the most preferred embodiments of the method and which are shown in figures 3 and 4, a hot-dip coating step 6 is performed after the annealing step 5. In the embodiments of the method shown in figures 3 and 4, both the hot-dip coating step 6 and the annealing step 5 may be performed in a hot-dip coating line HDCL. The hot-dip coating step 6 may include immersing the cold-rolled steel strip (in figure 4) or the hot-rolled steel strip (in figure 3) into molten metal such as zinc, aluminum or zinc-aluminum, which hot-dip coating step is performed subsequent to the annealing step 5 in order to obtain a hot-dip coated steel strip. In these embodiments, a hot-dip coated steel strip having good formability and high strength is obtained.

Fig 10 shows schematic time-temperature drawing of an embodiment according to the present invention comprising continuous annealing step 5 the cold-rolled and quenched steel strip and subsequent hot-dip coating step 6. In addition the hot-rolling step 2 is including thermomechanical rolling process including final hot-rolling temperature (FRT) between $T_{nr}$ and $A_{r3}$ temperatures.

Further said microalloyed steel slab comprises, in terms of weight percentages, the following alloying elements

| C | | 0.04-0.10 %, |
|---|---|---|
| Mn | | 0.5-2.2% |
| Si | 0-2.0%, | preferably 0-1%, |
| Al | 0-1.5%, | preferably 0.01-0.07%, |
| Cr | 0-2%, | preferably 0-0.5%, |
| Ni | 0-2%, | preferably 0-0.5%, |
| Cu | 0-2%, | preferably 0-0.3%, |
| Mo | 0-0.5%, | preferably 0-0.2%, |

(continued)

| | |
|---|---|
| B | 0-0.0005%, |
| Ca | 0-0.01 %, and one or more of the following |

V: 0.01 - 0.15%, or Nb: 0.01 - 0.10%, or Ti: 0.01 - 0.15%,
the balance being iron and unavoidable impurities, and
$Mn_{eq} > 0.5$, as calculated by the equation below

$$Mn_{eq} = Mn(\%) + 124B(\%) + 3Mo(\%) + 1\tfrac{1}{2}Cr(\%) + \tfrac{1}{3}Si(\%) + \tfrac{1}{3}Ni(\%) + \tfrac{1}{2}Cu(\%).$$

The reasons for the alloy are explained later in this description.

Next the high strength formable continuously annealed steel strip product and preferred embodiments and variants thereof will be described in greater detail.

The high strength formable continuously annealed steel strip product is microalloyed steel that comprises one or more microalloying elements belonging to the group consisting of Titanium Ti, Niobium Nb and Vanadium V.

Preferably the high strength formable comprises vanadium V, and optionally one or more of titanium Ti, or, niobium Nb. Vanadium increases yield strength effectively by precipitation hardening. This is because vanadium precipitates are forming in a temperature range, in which formation of vanadium precipitates can be affected by the means of the present invention. However, also at least the growth of other precipitates can be affected by means of the present invention. The sum of said microalloying elements is in mass percentages in the range from 0.02 to 0.25%, i.e. 0.02 < Ti + Nb + V < 0.25 %.

The high strength formable continuously annealed steel strip product has a precipitation structure consisting at least partly of coherent and/or semicoherent precipitates. This leads to the benefits described earlier and may even lead to increased yield strength compared to a precipitation structure consisting essentially of incoherent precipitates, which incoherent precipitates are usually significantly included in steel strips which are produced by previously known methods for manufacturing high strength formable continuously annealed steel strips.

Even though small amount of precipitates may have lost their coherency during the manufacturing process, still at least part of the, preferably most of the precipitates are coherent and/or semicoherent so that the precipitation structure consists at least partly, preferably essentially of coherent and/or semicoherent precipitates. This can be seen in high strength obtained in the examples. In the high strength formable continuously annealed steel strip product, in terms of mass percentages, at least 30%, more preferably at least 50% of microalloying elements maybe included in coherent and/or semicoherent precipitates.

Precipitates of said precipitation structure can be carbides, nitrides or carbonitrides of vanadium V, niobium Nb, and/or titanium Ti, such as vanadium nitride VN, vanadium carbide VC, niobium carbonitride NbCN, or titanium carbide TiC. Preferably, the precipitation structure of continuous annealed high strength formable steel strip includes coherent and/or semicoherent precipitates that are extremely small in size, such as less than 30 nm, most preferably less than 10 nm, such as about 5 nm. They are spread homogenously in the matrix and they may also include spherical shape. Most advantageously, said precipitation structure consists essentially of coherent precipitates. As can be understood based on this description, it is preferable that the precipitates to be considered in context of this patent publication are only Type III precipitates, i.e. such precipitates that are formed during or after austenite to ferrite phase transformation in hot strip production. Those precipitates are formed in ferrite after austenite to ferrite phase transformation and are coherent/semicoherent in respect to surrounding ferrite matrix. Due to the small size of coherent and or semicoherent precipitates, they can form coherent interfaces with the surrounding matrix, i.e. crystal misorientation angle of the precipitated phase in relation to matrix phase is less than 15 degree. Thanks to small size of precipitates, they form coherent and/or semicoherent interfaces with the surrounding matrix. As the interface around the precipitate is not usually the same and continuous over the entire surface of the precipitated phase, in context of this patent application, at least part of, preferably most of the precipitates of the precipitation structure are considered to form coherent and/or semicoherent interfaces with the surrounding matrix. Those interfaces are defined as follows:

- In coherent interfaces the crystals match together over the interface plane so that two lattices are continuous across the interface.
- In semicoherent interfaces the crystals match together only on the local basis over the interface plane because perfect matching is interrupted by misfit dislocation.

Preferably, the microstructure of high strength formable continuously annealed steel strip product consists essentially of ferrite ($\alpha$) grains including finely dispersed precipitation structure formed in said ferrite. In other words, it is preferred that the microstructure is essentially single phase ferrite with finely dispersed precipitation structure.

The general steel composition referred herein is very typical composition for high strength formable steels according to prior art. The high strength formable continuously annealed steel strip product can comprise, in terms of weight percentages, the following alloying elements

| C | | 0.04-0.10 %, |
|---|---|---|
| Mn | | 0.5-2.2% |
| Si | 0-2.0%, | preferably 0-1%, |
| Al | 0-1.5%, | preferably 0.01-0.07%, |
| Cr | 0-2%, | preferably 0-0.5%, |
| Ni | 0-2%, | preferably 0-0.5%, |
| Cu | 0-2%, | preferably 0-0.3%, |
| Mo | 0-0.5%, | preferably 0-0.2%, |
| B | | 0-0.0005%, |
| Ca | 0-0.01 %, | |

and one or more of the following V: 0.01 - 0.15%, or Nb: 0.01 - 0.10%, or Ti: 0.01 - 0.15%,
the balance being iron and unavoidable impurities and
$Mn_{eq}$ >0.5, as calculated by the equation below

$$Mn_{eq} = Mn(\%) + 124B(\%) + 3Mo(\%) + 1\tfrac{1}{2}Cr(\%) + \tfrac{1}{3}Si(\%) + \tfrac{1}{3}Ni(\%) + \tfrac{1}{2}Cu(\%)$$

According to a preferred embodiment of the present invention, the high strength formable continuously annealed steel strip product comprises vanadium V 0.01-0.15% and optionally one or more of the following alloying elements titanium Ti or niobium Nb. Vanadium holds especially great beneficial effects, since as a very fine, equally dispersed coherent and semicoherent precipitates, it ensures the improved elongation possibly together with effective precipitation strengthening. Titanium and niobium are optional but are preferably used alongside with vanadium.

Preferably, the sum of microalloying elements in terms of weight percentages is in the given range 0.02 < Ti+Nb+V < 0.25 %. Preferably within this above mentioned range, the individual microalloying contents, that are also individually selectable, are as followed:

V: 0.01 - 0.15%, most preferably 0.02-0.10%
Nb: 0.01 - 0.10%, most preferably 0.01 - 0.06%
Ti: 0.01 - 0.15%, most preferably 0.015-0.045%

Lower limits for the contents of microalloying elements are given because under those limits, it is difficult if not impossible to achieve mentioned beneficial effects. Upper limits for the contents of microalloying elements are given because over those limits, beneficial effects are saturated or reduced. Same relates to preferred lower and upper limits, respectively.

Carbon C is basic element to increase the strength of steel by forming solid solution strengthening and precipitating as different kind of carbides in the matrix. To achieve a desired strength and to obtain desired precipitation related benefits, steel contains carbon 0.04-0.10 %. The upper limits are set because if carbon is used excessively it would weaken weldability as well as formability.

Manganese Mn is typically included in steel due to the reasons concerning smelt processing and also it is used to bind sulfur S and form MnS, but it is desired to utilize it also as strength increasing element. Upper limit is selected in order to avoid excessive strengthening and further to ensure weldability and suitability for optional coating process. Mn is alloyed 0.5-2.2 %, since the strength is assured this way in low alloying cost.

Silicon Si can function, like Aluminium Al, as deoxidation element, and it can be also utilized in solid solution strengthening up to 2%, preferably up to 1% especially if better surface quality is desired. Upper limit is selected in order to avoid excessive strengthening.

Aluminium Al can be utilized up to 1.5% in order to affect the carbide formation during thermal processing of steel. However, it is preferred to utilize it only in deoxidation, in contents 0.01-0.07%.

Chromium Cr can be utilized up to 2% in order to increase strength. Upper limit is selected in order to avoid excessive strengthening and upper limit is preferably 0.5%. Furthermore low Cr improves weldability.

Nickel Ni can be utilized up to 2% in order to increase strength. Upper limit is selected in order to avoid excessive strengthening and upper limit is preferably 0.5%. Furthermore low Ni improves weldability.

Copper Cu can be utilized up to 2% in order to increase strength. Upper limit is selected in order to avoid excessive strengthening and upper limit is preferably 0.3%. Furthermore low Cu improves weldability.

Molybdenium Mo can be utilized up to 0.5% in order to increase strength. Upper limit is selected in order to avoid excessive strengthening and upper limit is preferably 0.2%. Furthermore low Mo improves weldability.

Boron B can be utilized in order to increase strength. However, due to the high hardenability factor of boron, it is preferred not to alloy boron and thereby have boron contents 0-0.0005%.

Calcium Ca can be included in the steel due to the reasons concerning smelt processing up to 0.01%, such as typical content of calsium treated steel.

However, in order to obtain satisfactory phase strengthening during quenching step 2, the steel composition should have suitable manganese equivalent $Mn_{eq}$ at least 0.5. However, in formability point of view, $Mn_{eq}$ is preferably less than 3.9. For same reasons, most preferred ranges for $Mn_{eq}$ are at least 0.9 but less than 2.5.

In addition to the alloying elements and iron, steel usually comprises small amount of secondary chemical elements, that are usually referred as unavoidable impurities or impurities originated from smelting. Those are:

Nitrogen N is an element that can bind microalloying elements existing in steel to nitrides and carbonitrides, thereby it can constitute said precipitates. This is why, nitrogen content of at least 0.001% may be included in steel. However, nitrogen more than 0.01% would allow said nitrides to coarsen, and therefore the nitrogen content should be preferably limited to 0.001-0.01%.

Phosphor P is usually unavoidably included in steel and should be restricted to 0.06% since higher content can be harmful for elongation. Most advantageously upper limit for P is 0.02%. However, excessive lowering of P may be disadvantageous economically and therefore lower limit 0.005% may be applied. Therefore P content can be 0.005-0.06%.

Sulphur S is usually unavoidably included in steel and should be restricted to lower contents than 0.02%, preferably to lower contents than 0.01%. However, excessive desulfurization may be disadvantageous economically and therefore lower limit 0.0001% may be applied. Therefore S content can be 0.0001-0.02%.

Oxygen O may exist as unavoidable element in steel, but should be restricted to less than 0.005%, more preferably less than 0.002%. This is because as it may exist as inclusion that debilitates formability.

According to first main embodiment, the high strength formable continuously annealed steel strip is in the form of a hot-rolled steel strip. The thickness of such a hot-rolled steel strip may be 2 to 6mm.

According to second main embodiment, the high strength formable continuously annealed steel strip is in the form of cold-rolled steel strip. This means that the steel strip has been both hot-rolled and cold-rolled. The thickness of such a strip may be 0.3 to 3mm. In this embodiment the cold-rolled steel strip further includes recrystallized and equiaxial grain structure.

The high strength formable continuously annealed steel strip can include a zinc, aluminum or zinc-aluminum coating.

Steel strip products are usually obtained by strip rolling, and they can be cut to length products such as sheets.

The yield strength $R_{p0.2}$ of the HSF continuous annealed steel strip is more than 340 MPa. This is the meaning of high strength in context of this application. However yield strength $R_{p0.2}$ greater than 800MPa, or greater than 700MPa may be difficult to achieve by means of the present invention. Therefore, the yield strength $R_{p0.2}$ of the HSF continuous annealed steel strip can be in the range 340 to 800MPa or more preferably in the range 340 to 700MPa. The promising results are obtained when the yield strength is in the range 460 to 600 MPa.

General formability can be evaluated by several properties, but primarily in context of this application it is meant that total elongation $A_{80}$ of HSF continuous annealed steel strip is greater than 10%. However, preferably it means that uniform elongation $A_g$ is greater than 10%, even most preferably greater than 12%, as shown in experiments. Furthermore, the feature of even yield strength improves formability related property, as described earlier.

Also the n-value and hole-expansion ratio can define formability, as disclosed in experimental part.

Next, still another feature of the method, of the high strength formable steel strip and of the steel coil according to the present invention is described in greater detail.

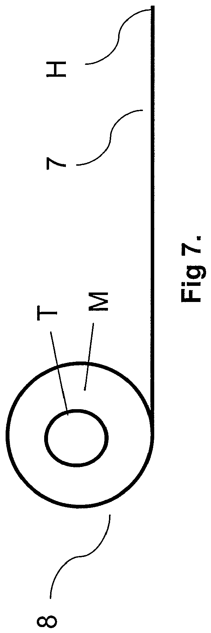

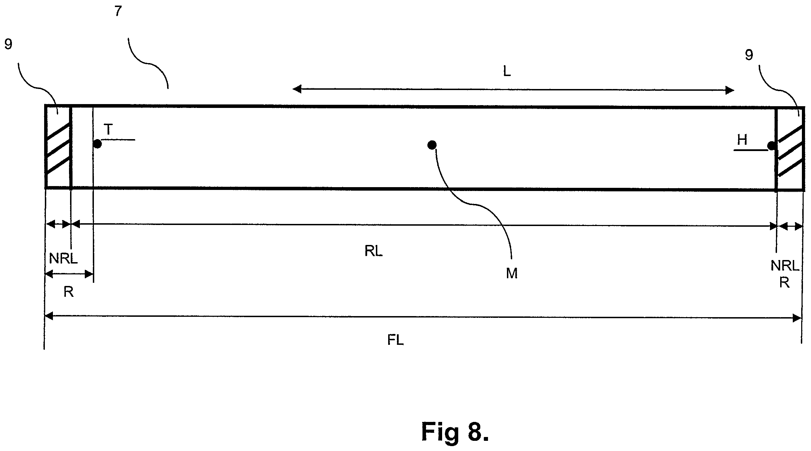

Referring to figure 7, there are shown schematically a partly uncoiled steel coil 8 consisting of HSF continuous annealed steel strip from the side projection. Further in fig 8, there is shown rolled steel strip 7 from the top projection. The full length of the rolled steel strip FL is consisting of rolling length RL and optionally of one or more of non-rolled lengths NRL. This is because in certain continuous rolling lines, those NRL are not necessarily made. The rolling length RL means at least the partial length of the rolled steel strip having full length FL that length was subjected to rolling, i.e. subjected to thickness reduction. If several rolling steps such as hot-rolling 2, cold-rolling 4 and finish rolling/skin pass rolling (not shown in figs) are carried out, then the rolling length RL relates to the rolling length of the final rolling step, i.e. of the last rolling step. In other words, only the rolling length RL holds the rolling thickness since the thickness is reduced in each rolling step. Naturally at least these non-rolled parts 9, which are shown in fig 10, of the rolled steel strip must be removed, if any, by length reducing from the steel strip product.

As described earlier, typical high coiling temperatures results in uneven mechanical properties throughout the rolling length of HSF continuous annealed steel strip. This is partly due to the uneven precipitation of microalloying elements throughout the length of the steel strip. This means that if even yield strength throughout the length of the HSF continuous annealed steel strip is desired, the rolling length RL cannot be utilized efficiently and, as depicted on left-side of fig 8, scrapped part(s) R must extend fairly far to the RL, i.e. to the length of the rolled steel strip that was subjected to rolling reduction. This would notably increase the loss of steel material, i.e. the amount of scrapping length R in the production, which is always undesired. On right-side of fig 8 is depicted a scenario that only NRL is scrapped. However scrapping lengths R are typically extending at least slightly onto the rolling-length RL for instance due to the possible transition length (not shown in figs), i.e. scrapping length R can be equal or longer than the non-rolled length NRL, if any, at the end of the rolled strip. Scrapping is carried out by reducing the length, such as by cutting.

As can be seen from fig 8, after the optional length reduction as described above, the resulted steel strip according to the present invention comprises at least 90% of the rolling length (RL) and comprises a head part H, a tail part T and a middle part M which said middle part M is located at midpoint between said head part H and said tail part T in longitudinal L direction of the steel strip. Longitudinal direction corresponds to the rolling direction. Preferably measurements in those parts are taken from the vicinity of the centerline of the steel strip.

By means of the present invention, as the direct quenching step 2 causes low coiling temperature, the HSF continuous annealed steel strip comprising at least 90%, such as 90-100% of the rolling length (RL) can hold the yield strength Rp0.2 as measured in transversal direction in relation to longitudinal direction L from said head part H, tail part T and middle part M, that said yield strength $R_{p0.2}$ differs as measured from said parts, at maximum 5.5 %. This type of feature is highly desired for high strength formable steel strips that are utilized for instance at automated forming lines, due the fact that variations in yield strength affects the spring back effect and thereby also the dimensional accuracy of formed steel component. In addition this reduces loss.

Therefore, in an preferred embodiment of the method, after the last rolling step of the method including rolling with the rolling length (RL), such as after cold-rolling step 4, the rolled steel strip is subjected to a length reducing step for reducing the length of the steel strip from one or two ends of said rolled steel strip, to a desired length of at least 90% of the rolling length RL, or alternatively leaving the rolling length RL as it is, where in the resulted steel strip is comprising a head part (H), a tail part (T) and a middle part (M) which said middle part (M) is located at midpoint between said head part (H) and said tail part (T) in longitudinal (L) direction of the steel strip, and the yield strength $R_{p0.2}$ of the resulted steel strip as measured in transversal direction in relation to longitudinal direction (L) from said head part (H), tail part (T) and middle part (M) differ from each other at maximum 5.5 %.

Therefore, preferably the high strength formable continuously annealed steel strip product, that is comprising a head part (H), a tail part (T) and a middle part (M) which said middle part (M) is located at midpoint between said head part (H) and said tail part (T) in longitudinal (L) direction of the steel strip, and having a length that is at least 90% of the rolling length (RL) can have yield strength $R_{p0.2}$ as measured in transversal direction in relation to longitudinal direction (L) from said head part (H), tail part (T) and middle part (M) that differ from each other at maximum 5.5 %.

Therefore the present invention relates also to a steel coil 8 consisting of high strength formable continuously annealed steel strip, which said strip is having a length that is at least 90%, such as 90-100% of the rolling length RL, the strip comprising a head part H, a tail part T and a middle part M which said middle part M is located at midpoint between said head part H and said tail part T in longitudinal L direction of the steel strip, which is characterized in that the yield strength $R_{p0.2}$ as measured in transversal direction in relation to longitudinal direction L from said head part H, tail part T and middle part M differ from each other at maximum 5.5 %.

The high strength formable continuously annealed steel strip of the steel coil may include any feature of above defined features of the high strength formable continuously annealed steel strip.

## Examples

In the experimental part, the influence of coiling temperature on mechanical properties of high strength formable steel strip was investigated. Table 2 below contains method parameters and mechanical properties of examples INV1 to INV28 according to the present invention and examples REF1 to REF14 according to the prior art. Examples INV1 to INV18 and REF1 to REF6 are disclosing cold-rolled (CR) steels and examples INV19 to INV28 and REF7 to REF14 are disclosing steels that are only hot-rolled (HR). References are deviated by the coiling temperature 534 °C from the examples according to the present invention. Measurements were taken from the head part H, from the tail part T and from the middle part M, which said middle part M is located at midpoint between said head part H and said tail part T in longitudinal L direction of the steel strip 7. Only non-rolled areas were removed as parts R, i.e. no additional removing of rolled steel strip was carried out.

The composition of table 2 examples is HSLA (high strength low allow) steel alloy that contained in mass percentages carbon C 0.06 %, silicon Si 0.18%, manganese Mn 1.2 %, aluminum Al 0.03%, niobium Nb 0.04 %, vanadium V 0.04 %, titanium Ti 0.015 %, the rest being iron and unavoidable impurities and residual contents. In these full scale experiments, a microalloyed steel slab having said composition was heated to austenizing temperature of about 1250 °C and after equalizing period, was then hot-rolled to a hot-rolled steel strips including different thicknesses shown in table 2. The hot-rolling was conducted as thermomechanical rolling. After the final hot-rolling pass of examples INV1-INV28 according to the invention, a direct quenching step to a temperature less than 250 °C was performed and a coiling step was done at a temperature less than 100 °C. Subsequently each strip was subjected to pickling.

In cold-rolled (CR) steel examples, after pickling, the hot-rolled and quenched steel strips were cold-rolled by using reductions around 50% to obtain cold-rolled steel strips including thicknesses 1,1 to 2,1mm. These direct quenched and cold-rolled steel strip were continuously annealed at hot-dip galvanizing line at temperature in the range 730°C to 770°C for about 90 s and cooled down to about 450 °C prior to immersing the strip into molten zinc. This way the steels of examples INV1 to INV18 were obtained. Several measurements were taken from cold-rolled (CR) hot-dip galvanized steel strips, as shown in columns of table 2. The results and parameters are given in the rows including INV1 to INV18 in the first column "example" of table 2 below. The reference examples, that were obtained by performing the same experiment accordingly, but using the coiling temperature about 534°C, are given in the rows including REF1 to REF6 in the first column "example" of table 2.

It can be seen from the table 2 below that the cold-rolled steel strips of examples INV1 to INV18 are having notably higher A80 and Ag elongation values (18-25% and 10,3-17,5%, respectively) than the reference strips REF1-REF6 (12-15%, and 6,9-9,5%, respectively). Therefore the formability is highly improved by means of the present invention. In addition, the hole-expansion ratio has increased from unacceptable level 65-82% to better level 82-113%, especially to good level 95-113%. It must be noted that in examples INV1 to INV18, the yield strength was 548-635MPa.

The microstructures of steel strips of examples INV1 to INV18 were completely recrystallized according to the figure 6 and this was obtained only by using low coiling temperature. The reference example, which was coiled at temperature 534 °C, was only partly recrystallized in the experiment realized accordingly in other respects. Partly recrystallized grain structure is shown in the figure 5. The difference can be seen from the elongation values, which are essentially greater in recrystallized experiments. Naturally the reference could be easily recrystallized by increasing the annealing temperature and/or annealing time, but this needs more energy and hinders to obtain precipitation structure consists essentially of coherent and/or semicoherent precipitates, because coarsening of said precipitates proceeds at increased annealing and/or annealing time. This in turn would decrease the strength.

Therefore present invention solves also the problem of achieving the both effective precipitation hardening and recrystallized grain structure. It can be seen from the table 2 below that continuous annealed high strength formable steel strip having yield strength $R_{p0.2} > 340$MPa or even $R_{p0.2} > 490$MPa and total elongation $A_{80} > 10$ %, or even $A_{80} > 15$ % can be obtained by the present invention. As can be seen, also the uniform elongation $A_g > 10$ % or even $A_g > 12$ % is possible to be obtained. Also the n-value $\geq 0.10$, even $\geq 0.12$ reflects the good formability of this steel product.

In hot-rolled (HR) steel examples, after pickling, the hot-rolled and quenched steel strips were continuously annealed at hot-dip galvanizing line at a temperature 750°C for about 90 s and cooled down to about 450 °C prior to immersing the strip into molten zinc. This way the examples INV19 to INV28 were obtained. Despite of these examples, lower temperatures would be preferred. Several measurements were taken from hot-rolled (HR) hot-dip galvanized steel strips, as shown in columns of table 2. The results and parameters are given in the rows including INV19 to INV28 in the first column "example" of table 2 below. The reference examples, which were obtained by performing the same experiment accordingly, but using the coiling temperature about 534°C, are given in the rows including REF7 to REF14 in the first column "example". It can be seen from the table 2 above that the hot-rolled steel strip of examples INV19 to INV28 are having higher yield strength (604-636 MPa) than same of examples REF7 to REF14 (576-623MPa) without essentially losing the formability. In addition the difference in the yield strength $R_{p0.2}$ measured in transversal direction in relation to longitudinal direction L from said head part H, tail part T and middle part M differ from each other only 2.8% in examples INV19-INV28 as the same is 6,6% in the reference examples REF7 to REF14. This feature improves formability of such products greatly.

As can be seen from column "DIF_TRANS Rp0.2 (%)" on table 2, by means of the present invention, the yield strength Rp0.2 as measured in transversal direction in relation to longitudinal direction L from said head part H, tail part T and middle part M of the steel strip differ from each other at maximum 5.5 %. As can be also seen the reference examples REF1 to REF 14, were having corresponding values at least 5,7%. This beneficial feature relates to both, cold-rolled (CR) and hot-rolled (HR) examples.

In the above, the invention has been illustrated by specific examples. It is to be noted, however, that the details of the invention may be implemented in many other ways within the scope of the accompanying claims.

**Table 2.**

| example | Hot-rolled (HR) or Cold rolled (CR) | Part of HDQ strip having FCRL (H/M/T) | Direction in relation to rolling direction L/T | Quenching speed (°C/s) | Coiling temperature (°C) | Hot-rolling thickness (mm) | Final thickness (mm) | Cold rolling reduction (%) | Continuous annealing temperature (°C) | Rp0.2 (Mpa) | DIF-TRANS Rp0.2 (Mpa) | Rm (Mpa) | A80 (%) | Ag (%) | n-value | Hole Expansion ratio (%) | Recrystallized after HDCL? |
|---|---|---|---|---|---|---|---|---|---|---|---|---|---|---|---|---|---|
| | **EXPERIMENT** | | | **METHOD PARAMETERS** | | | | | | **HSF PROPERTIES** | | | | | | | |
| | | | | | | | | | | **Continuous annealed steel strip** | | | | | | | |
| INV 1 | CR | H | L | >30 | 100 | 4.0 | 2.1 | 47 % | 730 | 510 | | 610 | 21 | 12.4 | 0.117 | 101 | Completely |
| INV 2 | CR | H | T | >30 | 100 | 4.0 | 2.1 | 47 % | 730 | 583 | 5.5 % | 635 | 18 | 10.3 | 0.082 | 101 | Completely |
| INV3 | CR | M | T | >30 | 100 | 4.0 | 2.0 | 51 % | 730 | 554 | | 604 | 21 | 12.7 | 0.121 | 108 | Completely |
| INV4 | CR | M | L | >30 | 100 | 4.0 | 2.0 | 51 % | 730 | 498 | | 586 | 22 | 13.4 | 0.129 | 108 | Completely |
| INV5 | CR | T | T | >30 | 100 | 4.0 | 2.0 | 51 % | 730 | 551 | | 606 | 21 | 12.8 | 0.122 | 113 | Completely |
| INV6 | CR | T | L | >30 | 100 | 4.0 | 2.0 | 50 % | 730 | 496 | | 584 | 22 | 13.6 | 0.132 | 113 | Completely |
| NV7 | CR | H | L | >30 | 100 | 2.5 | 1.1 | 56 % | 770 | 464 | | 548 | 23 | 15.9 | 0.155 | 95 | Completely |
| INV8 | CR | H | T | >30 | 100 | 2.5 | 1.1 | 56 % | 770 | 535 | 2.2 % | 560 | 25 | 15.6 | 0.152 | 95 | Completely |
| INV9 | CR | M | T | >30 | 100 | 2.5 | 1.1 | 57 % | 770 | 539 | | 569 | 25 | 15.2 | 0.148 | 86 | Completely |
| INV10 | CR | M | L | >30 | 100 | 2.5 | 1.1 | 57 % | 770 | 467 | | 551 | 23 | 15.5 | 0.149 | 86 | Completely |
| INV11 | CR | T | T | >30 | 100 | 2.5 | 1.1 | 55 % | 770 | 527 | | 551 | 25 | 16.8 | 0.165 | 88 | Completely |
| INV12 | CR | T | L | >30 | 100 | 2.5 | 1.1 | 55 % | 770 | 482 | | 531 | 25 | 17.5 | 0.178 | 88 | Completely |
| INV13 | CR | H | T | >30 | 100 | 3.3 | 1.5 | 54 % | 730 | 573 | 4.4 % | 615 | 20 | 12.3 | 0.117 | 82 | Completely |
| INV14 | CR | H | L | >30 | 100 | 3.3 | 1.5 | 54 % | 730 | 516 | | 595 | 20 | 13.4 | 0.128 | 82 | Completely |
| INV15 | CR | M | L | >30 | 100 | 3.3 | 1.5 | 56 % | 730 | 508 | | 590 | 20 | 13.9 | 0.131 | 83 | Completely |
| INV16 | CR | M | T | >30 | 100 | 3.3 | 1.5 | 56 % | 730 | 556 | | 604 | 21 | 12.8 | 0.124 | 83 | Completely |
| INV17 | CR | T | T | >30 | 100 | 3.3 | 1.5 | 55 % | 730 | 548 | | 599 | 22 | 13.5 | 0.127 | 96 | Completely |
| INV18 | CR | T | L | >30 | 100 | 3.3 | 1.5 | 55 % | 730 | 499 | | 584 | 21 | 14.1 | 0.135 | 96 | Completely |
| REF1 | CR | H | L | >30 | 534 | 4.0 | 2.0 | 49 % | 730 | 580 | | 685 | 14 | 8.5 | - | 67 | Partly |

(continued)

| | EXPERIMENT | | | METHOD PARAMETERS | | | | | | HSF PROPERTIES | | | | | | | | |
|---|---|---|---|---|---|---|---|---|---|---|---|---|---|---|---|---|---|---|
| | | | | | | | | | | Continuous annealed steel strip | | | | | | | | |
| example | Hot-rolled (HR) or Cold rolled (CR) | Part of HDQ strip having FCRL (H/M/T) | Direction in relation to rolling direction L/T | Quenching speed (°C/s) | Coiling temperature (°C) | Hot-rolling thickness (mm) | Final thickness (mm) | Cold rolling reduction (%) | Continuous annealing temperature (°C) | Rp0.2 (Mpa) | DIF-TRANS Rp0.2 (Mpa) | Rm (Mpa) | A80 (%) | Ag (%) | n-value | Hole Expansion ratio (%) | Recrystallized after HDCL? |
| REF2 | CR | H | T | >30 | 534 | 4.0 | 2.1 | 49 % | 730 | 666 | 5.7 % | 746 | 12 | 6.9 | - | 67 | Partly |
| REF3 | CR | M | T | >30 | 534 | 4.0 | 2.0 | 51 % | 730 | 634 | | 727 | 12 | 7 | - | 65 | Partly |
| REF4 | CR | M | L | >30 | 534 | 4.0 | 2.0 | 51 % | 730 | 562 | | 674 | 15 | 9.5 | - | 65 | Partly |
| REF5 | CR | T | T | >30 | 534 | 4.0 | 2.0 | 51 % | 730 | 628 | | 718 | 13 | 7.7 | - | 82 | Partly |
| REF6 | CR | T | L | >30 | 534 | 4.0 | 2.0 | 51 % | 730 | 559 | | 672 | 15 | 9.2 | - | 82 | Partly |
| INV19 | HR | H | T | >30 | 100 | 2.5 | 2.5 | | 750 | 567 | 2.8 % | 627 | 17 | 9.2 | - | 111 | |
| INV20 | HR | H | T | >30 | 100 | 2.5 | 2.5 | | 750 | 561 | | 619 | 16 | 9.1 | - | 111 | |
| INV21 | HR | H | L | >30 | 100 | 2.5 | 2.4 | | 750 | 513 | | 608 | 18 | 10.3 | 0.093 | 111 | |
| INV22 | HR | H | L | >30 | 100 | 2.5 | 2.4 | | 750 | 511 | | 604 | 17 | 9.6 | - | 111 | |
| INV23 | HR | M | T | >30 | 100 | 2.5 | 2.5 | | 750 | 577 | | 641 | 19 | 8.5 | - | 114 | |
| INV24 | HR | M | T | >30 | 100 | 2.5 | 2.5 | | 750 | 568 | | 631 | 15 | 8.1 | - | 114 | |
| INV25 | HR | M | L | >30 | 100 | 2.5 | 2.4 | | 750 | 523 | | 620 | 18 | 9.8 | - | 114 | |
| INV26 | HR | T | T | >30 | 100 | 2.5 | 2.5 | | 750 | 570 | | 636 | 17 | 8.8 | - | 120 | |
| INV27 | HR | T | T | >30 | 100 | 2.5 | 2.5 | | 750 | 561 | | 625 | 15 | 8.1 | - | 120 | |
| INV28 | HR | T | L | >30 | 100 | 2.5 | 2.4 | | 750 | 520 | | 618 | 17 | 9.9 | - | 120 | |
| REF7 | HR | H | L | >30 | 534 | 3.0 | 3.0 | | 750 | 484 | | 576 | 20 | 11.2 | 0.105 | 123 | |
| REF8 | HR | H | T | >30 | 534 | 3.0 | 3.0 | | 750 | 527 | | 587 | 20 | 10.3 | 0.097 | 123 | |
| REF9 | HR | M | T | >30 | 534 | 3.0 | 3.0 | | 750 | 564 | 6.6 % | 621 | 19 | 9.8 | - | 115 | |
| REF10 | HR | M | T | >30 | 534 | 3.0 | 3.0 | | 750 | 564 | | 620 | 17 | 9.5 | - | 115 | |

(continued)

| | EXPERIMENT | | | METHOD PARAMETERS | | | | | | HSF PROPERTIES | | | | | | | |
| --- | --- | --- | --- | --- | --- | --- | --- | --- | --- | --- | --- | --- | --- | --- | --- | --- | --- |
| | | | | | | | | | | Continuous annealed steel strip | | | | | | | |
| example | Hot-rolled (HR) or Cold rolled (CR) | Part of HDQ strip having FCRL (H/M/T) | Direction in relation to rolling direction L/T | Quenching speed (°C/s) | Coiling temperature (°C) | Hot-rolling thickness (mm) | Final thickness (mm) | Cold rolling reduction (%) | Continuous annealing temperature (°C) | Rp0.2 (Mpa) | DIF-TRANS Rp0.2 (Mpa) | Rm (Mpa) | A80 (%) | Ag (%) | n-value | Hole Expansion ratio (%) | Recrystallized after HDCL? |
| REF11 | HR | M | L | >30 | 534 | 3.0 | 3.0 | | 750 | 512 | | 605 | 19 | 10.8 | 0.1 | 115 | |
| REF12 | HR | T | T | >30 | 534 | 3.0 | 2.9 | | 750 | 559 | | 623 | 20 | 9 | - | 115 | |
| REF13 | HR | T | T | >30 | 534 | 3.0 | 2.9 | | 750 | 558 | | 622 | 18 | 8.9 | - | 115 | |
| REF14 | HR | T | L | >30 | 534 | 3.0 | 2.9 | | 750 | 509 | | 607 | 18 | 10.3 | 0.09 | 115 | |

## Claims

1. A method for manufacturing a continuously annealed high strength formable (HSF) steel strip product including yield strength $R_{p0.2}$ more than 340 MPa and a total elongation $A_{80}$ of at least 10 % throughout a length of at least 90% of a rolling length (RL) of said continuously annealed high strength formable (HSF) steel strip product, the method comprising the following steps:

   • a providing step (1) for providing a microalloyed steel slab that consists of, in terms of weight percentages, the following alloying elements
   C 0.04-0.10 %,
   Mn 0.5-2.2%
   Si 0-2.0%, preferably 0-1 %,
   0-1.5%, preferably 0.01-0.07%,
   Cr 0-2%, preferably 0-0.5%,
   Ni 0-2%, preferably 0-0.5%,
   Cu 0-2%, preferably 0-0.3%,
   Mo 0-0.5%, preferably 0-0.2%,
   B 0-0.0005%,
   Ca 0-0.01%,
   N optionally 0.001-0.01%,
   P optionally 0.005- 0.06%,
   S optionally 0.0001-0.02%,
   O optionally up to 0.005%,
   and one or more of the following
   V:0.01 - 0.15%, or Nb: 0.01 - 0.10%, or Ti: 0.01 - 0.15%,
   the balance being iron and unavoidable impurities, and
   $Mn_{eq}$ >0.5, as calculated by the equation below

   $$Mn_{eq} = Mn(\%)+124B(\%)+3Mo(\%)+1\tfrac{1}{2}Cr(\%)+\tfrac{1}{3}Si(\%)+\tfrac{1}{3}Ni(\%)+\tfrac{1}{2}Cu(\%),$$

   wherein the sum of microalloying elements in terms of weight percentages is in the given range: 0.02 < Ti+Nb+V < 0.25%,
   • a hot-rolling step (2) for hot-rolling said steel slab in order to obtain a hot-rolled steel strip,
   • a quenching step (3) for direct quenching said hot-rolled steel strip to a temperature below 400 °C by using an average cooling rate of at least 30 °C/s to obtain a quenched steel strip,
   • optionally a cold rolling step (4) for cold-rolling the quenched hot-rolled steel strip obtained in the quenching step (3) to obtain a quenched and subsequently cold-rolled steel strip as a result of the cold-rolling step (4), and
   • an annealing step (5) for continuously annealing the quenched steel strip at an annealing temperature between 400 and 900 °C to obtain a continuously annealed high strength formable steel strip product,
   **characterized in that**
   the annealing step (5) is performed either:

   for a quenched steel strip in the form of a quenched hot-rolled steel strip that is obtained as a result of the quenching step (3),
   or
   for continuously annealing the quenched and subsequently cold-rolled steel strip obtained as a result of the cold-rolling step (4),
   **in that** said quenched steel strip comprises a microstructure consisting mainly of bainitic-ferrite and ferrite,
   and **in that**, in said annealing step (5) a quenched steel strip comprising said microstructure is annealed, whereby the microstructure of the steel strip is completely recrystallized,
   and **in that** after the last rolling step of the method, said last rolling step including rolling with the rolling length (RL), the rolled steel strip is subjected to a length reducing step for reducing the length of the steel strip from one or two ends of said rolled steel strip, to a desired length of at least 90% of the rolling length RL, or alternatively leaving the rolling length RL as it is, where in the resulting steel strip comprises a head part (H), a tail part (T) and a middle part (M) whereby said middle part (M) is located at midpoint between said head part (H) and said tail part (T) in a longitudinal (L) direction of the steel strip, and the yield strength Rp0.2 of the resulting steel strip as measured in a transversal direction in relation to said longitudinal direction (L) from said head part (H), tail part (T) and middle part (M) differ from each other at maximum 5.5 %.

**Patentansprüche**

1. Verfahren zur Herstellung eines durchlaufgeglühten, hochfesten, formbaren (HSF) Stahlbandprodukts, das eine Streckgrenze $R_{p0,2}$ von mehr als 340 MPa und eine Gesamtdehnung $A_{80}$ von mindestens 10 % über eine Länge von mindestens 90 % einer Walzlänge (RL) des durchlaufgeglühten, hochfesten, formbaren (HSF) Stahlbandprodukts aufweist, wobei das Verfahren die folgenden Schritte umfasst:

   • einen Bereitstellungsschritt (1) zum Bereitstellen einer mikrolegierten Stahlbramme, die in Gewichtsprozenten aus den folgenden Legierungselementen besteht
   C 0,04-0,10 %,
   Mn 0,5-2,2 %
   Si 0-2,0 %, vorzugsweise 0-1 %,
   Al 0-1,5 %, vorzugsweise 0,01-0,07 %,
   Cr 0-2 %, vorzugsweise 0-0,5 %,
   Ni 0-2 %, vorzugsweise 0-0,5 %,
   Cu 0-2 %, vorzugsweise 0-0,3 %,
   Mo 0-0,5 %, vorzugsweise 0-0,2 %,
   B 0-0,0005 %,
   Ca 0-0,01 %,
   N optional 0,001-0,01 %,
   P optional 0,005-0,06 %,
   S optional 0,0001-0,02 %,
   O optional bis zu 0,005 %,
   und einem oder mehreren der folgenden
   V: 0,01 - 0,15 %, oder Nb: 0,01 - 0,10 %, oder Ti: 0,01 - 0,15 %,
   wobei der Rest Eisen und unvermeidbare Verunreinigungen sind, und
   $Mn_{eq} > 0,5$, berechnet nach der folgenden Gleichung

$$Mn_{eq} = Mn(\%)+124B(\%)+3Mo(\%)+1\tfrac{1}{2}Cr(\%)+\tfrac{1}{3}Si(\%)+\tfrac{1}{3}Ni(\%)+\tfrac{1}{2}Cu(\%)$$

   wobei die Summe der Mikrolegierungselemente in Gewichtsprozenten in dem gegebenen Bereich liegt: $0,02 < Ti+Nb+V < 0,25$ %,
   • einen Warmwalzschritt (2) zum Warmwalzen der Stahlbramme, um ein warmgewalztes Stahlband zu erhalten,
   • einen Abschreckschritt (3) zum direkten Abschrecken des warmgewalzten Stahlbandes auf eine Temperatur unter 400 °C unter Verwendung einer durchschnittlichen Abkühlrate von mindestens 30 °C/s, um ein abgeschrecktes Stahlband zu erhalten,
   • optional einen Kaltwalzschritt (4) zum Kaltwalzen des in dem Abschreckschritt (3) erhaltenen, abgeschreckten, warmgewalzten Stahlbandes, um ein abgeschrecktes und anschließend kaltgewalztes Stahlband als Ergebnis des Kaltwalzschritts (4) zu erhalten, und
   • einen Glühschritt (5) zum Durchlaufglühen des abgeschreckten Stahlbandes bei einer Glühtemperatur zwischen 400 und 900 °C, um ein durchlaufgeglühtes, hochfestes, formbares Stahlbandprodukt zu erhalten,
   wobei der Glühschritt (5) entweder:

      für ein abgeschrecktes Stahlband in Form eines abgeschreckten, warmgewalzten Stahlbandes, das als Ergebnis des Abschreckschrittes (3) erhalten wird,
      oder für das Durchlaufglühen des abgeschreckten und anschließend kaltgewalzten Stahlbandes, das als Ergebnis des Kaltwalzschrittes (4) erhalten wird, durchgeführt wird,
      dass das abgeschreckte Stahlband eine Mikrostruktur umfasst, die hauptsächlich aus Bainit-Ferrit und Ferrit besteht, und dass in dem Glühschritt (5) ein abgeschrecktes Stahlband, das die Mikrostruktur umfasst, geglüht wird, wodurch die Mikrostruktur des Stahlbandes vollständig umkristallisiert wird,
      und dass nach dem letzten Walzschritt des Verfahrens, wobei der letzte Walzschritt Walzen mit der Walzlänge (RL) aufweist, das gewalzte Stahlband einem Längenreduzierungsschritt unterzogen wird, um die Länge des Stahlbandes von einem oder zwei Enden des gewalzten Stahlbandes auf eine gewünschte Länge von mindestens 90 % der Walzlänge RL zu reduzieren oder alternativ die Walzlänge RL unverändert zu lassen, wobei das resultierende Stahlband ein Kopfteil (H), ein Schwanzteil (T) und ein Mittelteil (M) umfasst, wobei sich das Mittelteil (M) in der Mitte zwischen dem Kopfteil (H) und dem Schwanzteil (T) in einer Längs-(L)-Richtung des Stahlbandes befindet, und sich die Streckgrenze Rp0,2 des resultierenden Stahlbandes gemessen in einer Querrichtung in Bezug auf die Längsrichtung (L) von dem Kopfteil (H), Schwanzteil (T) und Mittelteil (M) um maximal 5,5 % voneinander unterscheidet.

**Revendications**

1.  Procédé de fabrication d'un produit sous forme de bande d'acier recuite en continu formable à résistance élevée (HSF) comprenant une limite apparente d'élasticité $R_{p0,2}$ supérieure à 340 MPa et un allongement total $A_{80}$ d'au moins 10 % sur une longueur d'au moins 90 % d'une longueur de laminage (RL) dudit produit sous forme de bande d'acier recuite en continu formable à résistance élevée (HSF), le procédé comprenant les étapes suivantes :

    • une étape de fourniture pour fournir une brame d'acier micro-allié qui est constituée, en termes de pourcentages en poids, des éléments d'alliage suivants :

      C 0,04-0,10 %,
      Mn 0,5-2,2 %,
      Si 0-2,0 %, de préférence 0-1 %,
      Al 0-1,5 %, de préférence 0,01-0,07 %,
      Cr 0-2 %, de préférence 0-0,5 %,
      Ni 0-2 %, de préférence 0-0,5 %,
      Cu 0-2 %, de préférence 0-0,3 %,
      Mo 0-0,5 %, de préférence 0-0,2 %,
      B 0-0,0005 %,
      Ca 0-0,01 %,
      N éventuellement 0,001-0,01 %,
      P éventuellement 0,005-0,06 %,
      S éventuellement 0,0001-0,02 %,
      O éventuellement jusqu'à 0,005 % et
      un ou plusieurs des éléments suivants :

        V : 0,01-0,15 % ou Nb : 0,01-0,10 % ou Ti : 0,01-0,15 %,
        le restant étant formé de fer et d'impuretés inévitables et
        $Mn_{éq} > 0,5$, comme calculé par l'équation ci-dessous :

        $$Mn_{éq} = Mn(\%) + 124B(\%) + 3Mo(\%) + 1\frac{1}{2}Cr(\%) + 1/3Si(\%) + 1/3Ni(\%) + \frac{1}{2}Cu(\%),$$

        dans lequel la somme d'éléments de micro-alliages en termes de pourcentages en poids se situe dans la plage donnée : 0,02 < Ti + Nb + V < 0,25 %,

    • une étape de laminage à chaud (2) pour laminer à chaud ladite brame d'acier afin d'obtenir une bande d'acier laminée à chaud,
    une étape de trempe (3) pour tremper directement ladite bande d'acier laminée à chaud à une température inférieure à 400 °C en utilisant un taux de refroidissement moyen d'au moins 30 °C/s pour obtenir une bande d'acier trempée,
    • éventuellement une étape de laminage à froid (4) pour laminer à froid la bande d'acier laminée à chaud trempée obtenue à l'étape de trempe (3) afin d'obtenir une bande d'acier trempée et ensuite laminée à froid à la suite de l'étape de laminage à froid (4) et
    • une étape de revenu (5) pour faire revenir en continu la bande d'acier trempée à une température de revenu comprise entre 400 et 900 °C afin d'obtenir un produit sous forme de bande d'acier recuite en continu formable de résistance élevée,
    dans lequel l'étape de revenu (5) est effectuée :

      pour une bande d'acier trempée sous la forme d'une bande d'acier laminée à chaud trempée qui est obtenue à la suite de l'étape de trempe (3),

ou

pour faire revenir en continu la bande d'acier trempée et ensuite laminée à froid obtenue à la suite de l'étape de laminage à froid (4),

ladite bande d'acier trempée comprend une microstructure constituée principalement de ferrite bainitique et de ferrite et, dans ladite étape de revenu (5), une bande d'acier trempée comprenant ladite microstructure est soumise à un revenu, en sorte que la microstructure de la bande d'acier soit complètement cristallisée, et, après la dernière étape de laminage du procédé, ladite dernière étape de laminage comprenant un laminage de longueur de laminage (RL), la bande d'acier laminée est soumise à une étape de réduction de longueur pour réduire la longueur de la bande d'acier d'une ou deux extrémités de ladite bande d'acier laminée à une longueur souhaitée d'au moins 90 % de la longueur de laminage RL ou en laissant éventuellement la longueur de laminage RL telle quelle, dans lequel la bande d'acier obtenue comprend une partie de tête (H), une partie de queue (T) et une partie centrale (M), de sorte que ladite partie centrale (M) soit située à mi-chemin entre ladite partie de tête (H) et ladite partie de queue (T) dans une direction longitudinale (L) de la bande d'acier et que les limites apparentes d'élasticité Rp0,2 de la bande d'acier obtenue telles que mesurées dans une direction transversale par rapport à ladite direction longitudinale (L) à partir de ladite partie de tête (H), de ladite partie de queue (T) et de ladite partie centrale (M) diffèrent l'une de l'autre de 5,5 % au maximum.

```
┌─────────────────────────────────────────────────────────────┐
│         Providing a microalloyed steel slab (1)             │
└─────────────────────────────────────────────────────────────┘
                              │
                              ▼
┌─────────────────────────────────────────────────────────────┐
│       Hot-rolling to obtain a hot-rolled steel strip (2)    │
└─────────────────────────────────────────────────────────────┘
                              │
                              ▼
┌─────────────────────────────────────────────────────────────┐
│       Direct quenching said hot-rolled steel strip to a     │
│              temperature below 400 °C (3)                   │
└─────────────────────────────────────────────────────────────┘
                              │
                              ▼
┌─────────────────────────────────────────────────────────────┐
│   Continuous annealing at a temperature 400-900 °C (5)      │
└─────────────────────────────────────────────────────────────┘
```

**Fig 1.**

Providing a microalloyed steel slab (1)

Hot-rolling to obtain a hot-rolled steel strip (2)

Direct quenching said hot-rolled steel strip to a temperature below 400 °C (3)

Cold-rolling the steel strip (4)

Continuous annealing at a temperature 400-900 °C (5)

Fig 2.

```
┌─────────────────────────────────────────────────────────┐
│       Providing a microalloyed steel slab (1)            │
└─────────────────────────────────────────────────────────┘
                            │
                            ▼
┌─────────────────────────────────────────────────────────┐
│    Hot-rolling to obtain a hot-rolled steel strip (2)    │
└─────────────────────────────────────────────────────────┘
                            │
                            │
                            ▼
┌─────────────────────────────────────────────────────────┐
│   Direct quenching said hot-rolled steel strip to a      │
│          temperature below 400 °C (3)                    │
└─────────────────────────────────────────────────────────┘
                            │
                            ▼
┌─────────────────────────────────────────────────────────┐
│  Continuous annealing at a temperature 400-900 °C (5)    │
└─────────────────────────────────────────────────────────┘
                            │
                            ▼
┌─────────────────────────────────────────────────────────┐
│              Hot-dip coating (6)                         │
└─────────────────────────────────────────────────────────┘
```

Fig 3.

Providing a microalloyed steel slab (1)

→

Hot-rolling to obtain a hot-rolled steel strip (2)

→

Direct quenching said hot-rolled steel strip to a temperature below 400 °C (3)

→

Cold-rolling the steel strip (4)

→

Continuous annealing at a temperature 400-900 °C (5)

→

Hot-dip coating (6)

**Fig 4.**

25

3068-2, 100xobj.ZOOMx2-2

15 micron

Fig 5.

Fig 6.

**Fig 7.**

Fig 8.

EP 2 647 730 B1

Fig 9.

Fig 10.

Fig 11.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2001015245 A
- US 2004047756 A
- EP 1319726 A
- US 4426235 A
- JP 2005272954 B
- JP 2005336526 B
- JP 2011214070 A
- JP 2007321207 A
- JP 2006193819 A